# EUROPÄISCHE PATENTSCHRIFT

(11) **EP 0 722 963 B1**
(45) Veröffentlichungstag und Bekanntmachung des Hinweises auf die Patenterteilung: **26.04.2000**
(21) Anmeldenummer: 96100319.1
(22) Anmeldetag: 11.01.1996
(51) Int. Cl.: C08G 18/40

(54) **Wässrige Bindemittel für wässrige Beschichtungsmittel**
Aqueous binders for aqueous coating materials
Liants aqueux pour matériaux de revêtement aqueux

(30) Priorität: 24.01.1995 DE 19502084
(43) Veröffentlichungstag der Anmeldung: 24.07.1996
(73) Patentinhaber: BAYER AG, 51368 Leverkusen (DE)
(72) Erfinder: Schneider, Volker, Dr., D-47669 Wachtendonk (DE); Blum, Harald, Dr., D-47669 Wachtendonk (DE); Sickert, Armin, D-47800 Krefeld (DE)

(56) Entgegenhaltungen:
- GB-A- 2 076 840
- US-A- 3 844 993

## Beschreibung

Die Erfindung betrifft ein neues Verfahren zur Herstellung von wäßrigen Bindemitteln für insbesondere lufttrocknende Beschichtungsmittel auf Basis von wasserverdünnbaren, hydroxyfunktionellen Polyacrylaten und nicht wasserverdünnbaren, fettsäuremodifizierten Polyestern, die über Urethangruppen miteinander verknüpft sind, die nach diesem Verfahren erhältlichen wäßrigen Bindemittel und ihre Verwendung in wäßrigen Beschichtungsmitteln.

Der Ersatz organischer Lösemittel in lufttrocknenden Lacken und Beschichtungsmitteln durch Wasser ist seit langem ein Anliegen der Lackrohstoffhersteller.

Die DE-OS 3 428 204 beschreibt wäßrige Emulsionen von lufttrocknenden Lackbindemitteln auf Basis von fettsäuremodifizierten, Polyethylenglykol enthaltenden Alkydharzen, die mit Trimellithsäureanhydrid aufgesäuert sind und fettsäuremodifizierten Alkydharzen. Dabei sind die beiden Alkydharze durch teilweise Veresterung oder durch Diisocyanate miteinander verknüpft. Bei derartigen aufgesäuerten Polyesterbindemitteln treten bekannterweise, besonders im alkalischen pH-Bereich, häufig Lagerstabilitätsprobleme auf.

In der EP-A-0 379 007 werden oxidativ trocknende Alkydharze beschrieben, die durch die Umsetzung mit Diisocyanaten und Hydroxycarbonsäuren hydrophiliert werden. Derartige Bindemittel sind lagerstabil und erreichen, mit Ausnahme der relativ langsamen Trocknung aufgrund des relativ niedrigen Molekulargewichtes des Bindemittelharzes, ein hohes Eigenschaftsniveau.

In der US-PS 4 720 522 werden acrylmodifizierte Alkydharze als Bindemittel für wasserverdünnbare, lufttrockende Lacke beschrieben. Die acrylmodifizierten Alkydharze zeigen aufgrund der durch die radikalisch initiierten Copolymerisation reduzierten Reaktivität der ungesättigten Fettsäuren eine nur mäßige oxidative Trocknung und damit eine schlechte Beständigkeit der Lackfilme.

Es sind auch Kombinationen von urethanmodifizierten Alkydharzen in emulgierter Form mit Polyvinyl- bzw. Polyacryl-Latices bekannt (US-PS 3 919 145). Wegen des inerten, nicht vernetzbaren Latex-Anteils dieser Bindemittelemulsionen kann jedoch nur eine mäßige Filmqualität erreicht werden.

In der DE-PS 3 219 471 werden wäßrige Alkydharzemulsionen beschrieben, bei denen spezielle, Polyethylenglykol enthaltende, acrylmodifizierte Alkydharze als Emulgator für urethanmodifizierte Alkydharze eingesetzt werden. Der beschriebene Herstellprozeß der Bindemitteldispersionen ist kompliziert und außerdem besteht bei der Verwendung von externen Emulgatoren die Gefahr, daß sich nicht hydrophilierte Bindemittelanteile abtrennen.

Die der Erfindung zugrundeliegende Aufgabe war die Entwicklung von lagerstabilen, wäßrigen, oxidativ trocknenden Bindemitteln, die zur Herstellung von schnell trocknenden, qualitativ hochwertigen Beschichtungen geeignet sind und darüber hinaus nur geringe Anteile an organischen Colösern enthalten.

Diese Aufgabe konnte mit dem nachstehend näher beschriebenen erfindungsgemäßen Verfahren gelöst werden. Dieses Verfahren beruht auf der überraschenden Erkenntnis, daß die zumindest teilweise Verknüpfung von verzweigten, hydroxyfunktionellen Polyestern mit höhermolekularen hydroxyfunktionellen Poly(meth)acrylaten vor der Dispergierung dieser Lackbindemittel in Wasser nicht, wie eigentlich zu erwarten gewesen wäre, zur Gelbildung führt sondern vielmehr die Herstellung von stabilen wäßrigen Bindemitteldispersionen gestattet, die den genannten Anforderungen in qualitativer Hinsicht voll genügen.

Gegenstand der Erfindung ist ein Verfahren zur Herstellung von wäßrigen Bindemitteln für wäßrige Beschichtungsmittel, dadurch gekennzeichnet, daß man ein Gemisch aus
A) 9,9 bis 85 Gew.-% einer hydroxy- und säurefunktionellen Poly(meth)acrylatkomponente und
B) 14,9 bis 90 Gew.-% einer hydroxyfunktionellen, fettsäuremodifizierten Polyesterkomponente
mit
C) 0,1 bis 20 Gew.-% einer Diisocyanatkomponente, bestehend aus mindestens einem organischen Diisocyanat des Molekulargewichts 140 bis 318, unter Urethanbildung umsetzt und anschließend das Umsetzungsprodukt unter vorhergehender oder gleichzeitiger Neutralisation zumindestens eines Teils der vorliegenden Carboxylgruppen in Wasser löst und/oder dispergiert, mit der Maßgabe, daß sich die unter A) bis C) genannten Prozentangaben zu 100 ergänzen.

Gegenstand der Erfindung sind auch die nach diesem Verfahren erhältlichen wäßrigen Bindemittel.

Gegenstand der Erfindung ist auch die Verwendung der nach diesem Verfahren erhältlichen Bindemittel, gegebenenfalls in Kombination mit anderen oxidativ trocknenden Lackharzen in, gegebenenfalls die üblichen Hilfs- und Zusatzstoffe der Lacktechnologie enthaltenden, luft- und/oder hitzetrocknenden Beschichtungsmitteln.

Gegenstand der Erfindung ist auch die Verwendung der nach diesem Verfahren erhältlichen wäßrigen Bindemittel in, gegebenenfalls die üblichen Hilfs- und Zusatzstoffe der Lacktechnologie enthaltenden, wäßrigen 2-K-Polyurethan-Beschichtungsmitteln.

Gegenstand der Erfindung ist auch die Verwendung dieser wäßrigen Bindemittel in Kombinationen mit gegebenenfalls blockierten Polyisocyanaten und/oder Aminovernetzern in, gegebenenfalls die üblichen Hilfs- und Zusatzstoffe der Lacktechnologie enthaltenden, wäßrigen hitzehärtenden Beschichtungsmitteln.

Das nach der erfindungsgemäßen Umsetzung der Ausgangskomponenten A) und B) mit der Diisocyanatkomponente C) vorliegende, urethanmodifizierte Harz weist im allgemeinen ein nach der Gelpermeationschromatographie unter Verwendung von geeichtem Styrol als Standard bestimmbares mittleres Molekulargewicht M_{w} (Gewichtsmittel) von 1100 bis 70 000, insbesondere 1600 bis 45 000 und eine Säurezahl (bezogen auf alle Carboxylgruppen, die dabei zu 25 bis 100, vorzugsweise zu 40 bis 100 % in der Carboxylatform vorliegen) von 10 bis 100 mg KOH/g Substanz, vorzugsweise von 14 bis 60 mg KOH/g Substanz, auf.

In Abhängigkeit vom Molekulargewicht des Harzes, dessen Gehalt an Carboxyl-bzw. Carboxylatgruppen sowie von der Art des eingesetzten Neutralisationsmittels und der gegebenenfalls mitverwendeten Hilfslösemittel liegen die Produkte als wäßrige Lösung oder als Dispersion vor, im allgemeinen sind jedoch sowohl gelöste als auch dispergierte Anteile vorhanden.

Der vor- und nachstehend verwendete Ausdruck (Meth)-acrylat bedeutet Acrylat und/oder Methacrylat. "(Meth)acrylsäure" steht dementsprechend für Acrylsäure und/oder Methacrylsäure.

Bei der Durchführung des erfindungsgemäßen Verfahrens werden vorzugsweise 15 bis 80, insbesondere 25 bis 80 Gew.-% der Komponente A) in Abmischung mit 19 bis 80, insbesondere 25 bis 75 Gew.-% der Komponente B) mit 0,1 bis 15, insbesondere 0,5 bis 10 Gew.-% der Komponente C) zur Umsetzung gebracht.

Bei der Komponente A) handelt es sich um säurefunktionelle Poly(meth)acrylate aus
A I) 1 bis 99, bevorzugt 1 bis 50, besonders bevorzugt 1,5 bis 25-Gew. %, α,β-ungesättigter Mono- und/oder Dicarbonsäuren mit 3 bis 16 C-Atomen,
A II) 0,1 bis 30, bevorzugt 0,1 bis 20, besonders bevorzugt 0,5 bis 10 Gew.-%, hydroxyfunktioneller Alkylester der (Meth)acrylsäure mit gegebenenfalls Ethergruppen aufweisenden Hydroxyalkylestern mit 2 bis 12 Kohlenstoffatomen,
A III) 0 bis 98, bevorzugt 15 bis 98, besonders bevorzugt 30 bis 95 Gew.-% (Meth)acrylsäure(cyclo)alkylester mit 1 bis 20 C-Atomen im Alkylrest und
A IV) 0 bis 80, bevorzugt 0 bis 65, besonders bevorzugt 0 bis 50 Gew.-% anderer copolymerisierbarer Verbindungen,
wobei sich die zu A I) bis A IV) gemachten Prozentangaben zu 100 ergänzen,

Die Herstellung der hydroxy- und säurefunktionellen Poly(meth)acrylatkomponente A) erfolgt z.B. in einer an sich bekannten Weise durch radikalisch initiierte Polymerisation der Monomeren A I) bis A IV) in Gegenwart von 5 bis 40, bevorzugt 5 bis 20 Gew.-% an gegenüber Isocyanaten inerten Lösemitteln, wie z.B. Methoxypropylacetat, Xylol, Toluol, Butylacetat, Solvent-Naphtha, Dimethyldiglykol, Dimethylpropylenglykol, Dimethyldipropylenglykol, Diisobutylketon, N-Methylpyrrolidon oder Gemische derartiger Lösemittel.

Geeignete Monomere A I) sind beliebige mindestens eine Carboxylgruppe pro Molekül tragende, den gemachten Angaben entsprechende Säure wie z.B. Acrylsäure, Methacrylsäure, Ethylacrylsäure, Bisoxyethylester oder deren Gemische. Besonders bevorzugt wird als Komponente A I) Acrylsäure und/oder Methacrylsäure eingesetzt.

Als Monomere A II) können alle den gemachten Angaben entsprechende copolymerisierbaren, ethylenisch ungesättigten Monomere, die mindestens eine Hydroxylgruppe pro Molekül tragen oder Gemische solcher Monomerer eingesetzt werden. Geeignet sind z.B. Hydroxyalkylester der Acrylsäure, Methacrylsäure oder einer anderen α,β-ethylenisch ungesättigten Carbonsäure. Diese Ester können sich auch von einem Polyalkylenglykol mit insbesondere bis zu 12 Kohlenstoffatomen ableiten, das mit der Säure verestert ist, oder sie können durch Umsetzung der Säure mit einem Alkylenoxid erhalten werden. Als Beispiel sei das Polyethylglykolmono(meth)acrylat mit bis zu 12 Kohlenstoffatomen im Polyethylenglykol-Rest genannt. Als Komponente A II) werden vorzugsweise Hydroxyalkylester der Acrylsäure und Methacrylsäure oder Mischungen aus diesen Hydroxyalkylestern eingesetzt, wie z.B. 2-Hydroxyethylacrylat, die durch Anlagerung von einem Mol Propylenoxid an ein Mol Acrylsäure oder Methacrylsäure als Isomerengemisch anfallenden Hydroxypropyl(meth)acrylate, 2-Hydroxypropylacrylat, 3-Hydroxypropylacrylat, 2-Hydroxypropylmethacrylat, 3-Hydroxypropylmethacrylat, 4-Hydroxybutylacrylat und 4-Hydroxybutylmethacrylat. Entsprechende Ester von anderen ungesättigten Säuren, wie z.B. Ethacrylsäure, Crotonsäure und ähnliche Säuren mit bis zu etwa 6 Kohlenstoffatomen pro Molekül, können prinzipiell auch eingesetzt werden. Besonders bevorzugt handelt es sich um Hydroxyalkylester der genannten Säuren mit 2 bis 6 Kohlenstoffatomen im Hydroxyalkylrest.

Als Monomere A III) können beliebige copolymerisierbare (Cyclo)alkylester der (Meth)acrylsäure mit 1 bis 20 Kohlenstoffatomen im (Cyclo)alkylrest oder Gemische solcher Ester eingesetzt werden. In Betracht kommen insbesondere Alkyl(meth)acrylate mit 1 bis 18 Kohlenstoffatome im Alkylrest, wie z.B. Methyl-, Ethyl-, n-Propyl-, n-Butyl-, n-Hexyl-, 2-Ethylhexyl-, n-Stearyl- und n-Lauryl(meth)acrylat oder auch cycloaliphatische (Meth)acrylsäure-ester, wie z. B. Cyclohexyl(meth)acrylat.

Als Monomere A IV) können alle mit A I), A II) und A III) copolymerisierbaren, von diesen jedoch verschiedenen, auch mehrfach ethylenisch ungesättigten Verbindungen oder Gemische solcher Verbindungen eingesetzt werden. Beispiele hierfür sind Styrol, α-Methylstyrol, Vinyltoluol, Vinylpyrrolidon, Vinylether, Vinylester, Divinylbenzol, Di(meth)acrylsäureester von Diolen, wie z. B. Ethandiol, 1,3-Propandiol und 1,4-Butandiol. Grundsätzlich können jeweils beliebige Gemische der beispielhaft unter A I) bis A IV) genannten Monomeren eingesetzt werden.

Bei der Herstellung der Polyacrylatkomponente A) kann beispielsweise wie folgt vorgegangen werden:
Die Komponenten A I) bis A IV) werden zusammen, teilweise gemischt oder getrennt, zu einem geeigneten Lösemittel wie z.B. Methoxypropylacetat zudosiert und dort in Gegenwart mindestens eines Polymerisationsinitiators polymerisiert. Zur Erzielung besonderer Eigenschaften können ein oder auch mehrere Monomere schneller, langsamer, später beginnend und/oder früher oder später endend als die üblichen Monomere zugegeben werden.

Als Polymerisationsinitiatoren werden die ebenfalls an sich bekannten Verbindungen eingesetzt. Beispielsweise geeignet sind freie Radikale bildende Peroxide, wie z.B. Benzoylperoxid, tert.-Butylperbenzoat, tert.-Butylper-2-ethylhexanoat, Di-tert.-Butylperoxid oder Azoinitiatoren, wie z. B. Azobisisobutyronitril, oder Mischungen daraus.

Die Polymerisation wird, je nach eingesetztem Initiator, bei Temperaturen von 60 bis 180°C, vorzugsweise bei 100 bis 160°C durchgeführt.

Zur Erzielung des gewünschten Molekulargewichtes können Regler, wie z.B. Dodecylmercaptan oder Mercaptoethanol in Mengen von 0,01 bis 6 % mitverwendet werden.

Die Art und Mengenverhältnisse der Ausgansmaterialien, sowie die Reaktionsbedingungen bei der Herstellung der Copolymerisate A) werden im Rahmen der gemachten Offenbarung im übrigen vorzugsweise so gewählt, daß Copolymerisate A) resultieren, die ein nach der Gelpermeationschromatographie unter Verwendung von geeichtem Styrol als Standard bestimmbares mittleres Molekulargewicht M_{w} (Gewichtsmittel) von 1000 bis 50 000, insbesondere von 1500 bis 25 000, eine Säurezahl von 7 bis 560, vorzugsweise von 7 bis 390, besonders bevorzugt von 11 bis 195 mg KOH/g und eine Hydroxylzahl von 0,5 bis 145, vorzugsweise 0,5 bis 97, besonders bevorzugt von 2,5 bis 48 mg KOH/g aufweisen.

Die Polyesterkomponente B) wird durch Umsetzung von
B I) 15 bis 90, bevorzugt 25 bis 75, besonders bevorzugt 35 bis 65 Gew.-% einer Monocarbonsäurekomponente, die zumindest aus einer Monocarbonsäure des Molekulargewichtsbereichs 122 bis 340 besteht, wobei mindestens 60 Gew.-% der Komponente B I) aus mindestens einer ungesättigten, zur oxidativen Trocknung befähigten Fettsäure bestehen,
B II) 7 bis 60, bevorzugt 10 bis 40, besonders bevorzugt 13 bis 30 Gew.-% einer Polycarbonsäurekomponente, bestehend aus mindestens einer Di-, Tri- oder Tetracarbonsäure des Molekulargewichtsbereichs 98 bis 840 und/oder mindestens einem Anhydrid einer derartigen Säure,
B III) 10 bis 60, bevorzugt 15 bis 45, besonders bevorzugt 20 bis 40 Gew.-% einer Polyolkomponente, bestehend aus mindestens einem mindestens zweiwertigen Alkohol des Molekulargewichtsbereichs 62 bis 400 und
B IV) 0 bis 30 Gew.-% an anderen Komponenten
hergestellt, wobei sich die bezüglich B I) bis B IV) genannten Prozentsätze zu 100 ergänzen.

Als Komponente B I) bzw. als Teil dieser Komponente geeignete Monocarbonsäuren sind z.B. Benzoesäure, tert.-Butylbenzoesäure, Hexahydrobenzoesäure, gesättigte Fettsäuren wie 2-Ethylhexansäure, Kokosölfettsäure, ungesättigte Fettsäuren wie Sojaölfettsäure, Holzölfettsäure, Safflorölfettsäure, Ricinusfettsäure, Ricinenfettsäure, Erdnußfettsäure, Tallölfettsäure oder Konjuenfettsäure.

Als Komponente B II) bzw. als Teil der Komponente B II) geeignet sind Di-, Tri- und/oder Tetracarbonsäuren bzw. deren Anhydride des Molekulargewichtsbereichs 98 bis 840. Geeignet sind z. B. Phthalsäure(anhydrid), Isophthalsäure, Terephthalsäure, Tetrahydrophthalsäure(anhydrid), Hexahydrophthalsäure(anhydrid), Bernsteinsäure(anhydrid), Maleinsäure(anhydrid), Fumarsäure, Adipinsäure, Sebacinsäure, Azelainsäure, Dimerfettsäure, Trimerfettsäure, Trimellithsäure(anhydrid), Pyromellithsäure(anhydrid), Butantetracarbonsäure oder Gemische derartiger Säuren.

Als Komponente B III) bzw. als Teil der Komponente B III) geeignet sind Di-, Tri- und/oder Tetraole wie z.B. Ethylenglykol, 1,2- und 1,3-Propylenglykol, 1,3-, 1,4-, 2,3-Butandiol, 1,6-Hexandiol, 2,5-Hexandiol, Trimethylhexandiol, Diethylenglykol, Triethylenglykol, hydrierte Bisphenole, 1,4-Cyclohexandiol, 1,4-Cyclohexandimethanol, Trimethylolpropan, Glycerin, Pentaerythrit, Trimethylpentandiol, Dipentaerythrit und Gemische derartiger Alkohole.

Als Komponente B IV) bzw. Teil der Komponente B IV) geeignet sind insbesondere Monoole des Molekulargewichtsbereichs 100 bis 290, wie z. B. n-Hexanol, Cyclohexanol, Decanol, Dodecanol, Tetradecanol, Octanol, Octadecanol, natürliche Fettalkoholgemische, wie z. B. Ocenol 110/130® (Fa. Henkel) und Gemische dieser oder anderer Alkohole und/oder Hydroxycarbonsäuren oder deren cyclischen Estern, wie z.B. Milchsäure, Dimethylolpropionsäure oder ε-Caprolacton.

Die Herstellung der Polyesterpolyole B) erfolgt durch an sich bekannte Veresterung der beispielhaft genannten Ausgangskomponenten B I)-B IV), gegebenenfalls unter Zuhilfenahme von üblichen Veresterungskatalysatoren, vorzugsweise nach dem Prinzip einer Schmelz- oder Azeotropkondensation bei Temperaturen von 180 bis 240°C. Im übrigen werden Art und Mengenverhältnisse der Ausgangskomponenten B I) bis B IV) und die Reaktionsbedingungen so gewählt, daß Polyester B) resultieren, die eine Hydroxylzahl von 8 bis 300, vorzugsweise von 100 bis 190 mg KOH/g und eine Säurezahl von maximal 15, vorzugsweise maximal 8, besonders bevorzugt maximal 4 mg KOH/g aufweisen. Das gelpermeationschromatographisch unter Verwendung von Polystyrol als Standard ermittelbare mittlere Molekulargewicht M_{w} (Gewichtsmittel) der Komponente B) liegt im allgemeinen bei 500 bis 8000, vorzugsweise 1000 bis 5000.

Bei der Komponente C) handelt es sich um eine Diisocyanat-Komponente, bestehend aus mindestens einem organischen Diisocyanat des Molekulargewichtsbereichs 140 bis 318. Geeignet sind beispielsweise 1,4-Butandiisocyanat, Hexamethylendiisocyanat, 1-Isocyanato-3,3,5-trimethyl-5-isocyanatomethylcyclohexan (Isophorondiisocyanat, abgekürzt: IPDI), 4,4'-Diisocyanatodicyclohexylmethan, 4,4'-Diisocyanatodiphenylmethan, Toluylen-2,4-diisocyanat, Toluylen-2,6-diisocyanat, 2,4,4-Trimethylhexamethylen-1,6-diisocyanat, Naphthylendiisocyanat und andere Diisocyanate, wie z.B. in "Methoden der organischen Chemie" (Houben-Weyl, Bd. 14/2, 4.Auflage, Georg Thieme Verlag, Stuttgart 1963, S. 61-70 beschrieben werden.

Die erfindungsgemäße Umsetzung zwischen den Einzelkomponenten A), B) und C) kann in Gegenwart von an sich bekannten, die Isocyanat-Additionsreaktion beschleunigenden Katalysatoren, die, falls überhaupt, in Mengen von 0,01 bis 2,5 Gew.-%, bezogen auf das Gewicht des gesamten Reaktionsansatzes, eingesetzt werden, erfolgen. Geeignete Katalysatoren sind z.B. Dibutylzinnoxid, Dibutylzinndilaurat oder Triethylamin.

Die Umsetzung wird im allgemeinen in unter den Reaktionsbedingungen gegenüber Isocyanatgruppen inerten Lösungsmitteln bei Festgehalten von 50 bis 98, vorzugsweise 70 bis 95 Gew.-% durchgeführt. Geeignete Lösungsmittel sind z.B. Aceton, Dimethyldiglykol, N-Methylpyrrolidon, N-Methylcaprolactam, Ethylglykolacetat bzw. Gemische dieser wasserverdünnbaren Lösungsmittel mit anderen Lösungsmitteln, wie z.B. n-Butylacetat, Methoxypropylacetat, Xylol, Toluol u. dgl.

Zur Durchführung des erfindungsgemäßen Verfahrens kann beispielsweise so vorgegangen werden, daß man die Komponenten A) und B) und gegebenenfalls das mitverwendete Lösungsmittel homogenisiert, dann bei 50 bis 120°C die Komponente C) innerhalb eines Zeitraums von 1 Minute bis zu 2 Stunden zudosiert und das Reaktionsgemisch unter Ausnutzung der exothermen Reaktion so lange bei 80 bis 140°C rührt, bis der Gehalt an freien Isocyanatgruppen einen Wert von 0,1 Gew.-%, bezogen auf das Gewicht des Reaktionsansatzes, unterschritten hat. Werden besonders hohe Anforderungen an den Restgehalt organischer Lösemittel gestellt, so kann ein Teil oder die Gesamtmenge des Lösemittels vor und/oder während und/oder nach der Neutralisation bzw. dem Dispergieren des Harzes in Wasser, gegebenenfalls azeotrop und/oder durch Anlegen eines Vakuums bzw. eines verstärkten Inertgasstromes aus dem Reaktionsgemisch entfernt werden.

Im übrigen werden Art und Mengenverhältnis der Ausgangskomponente A) bis C) so gewählt, daß nach beendeter Umsetzung Produkte vorliegen, die ein nach der Gelpermeationschromatographie an geeichtem Styrol ermitteltes Molekulargewicht M_{w} von 1100 bis 70 000, vorzugsweise 1600 bis 45 000, eine Säurezahl von 10 bis 100, vorzugsweise 14 bis 60 mg KOH/g Festsubstanz, eine Hydroxylzahl von 1 bis 170, vorzugsweise 14 bis 170 mg KOH/g Festsubstanz und einen Gehalt an über die Komponente BI) eingebauten olefinischen Doppelbindungen (berechnet als C=C, Molekulargewicht = 24) von 0,1 bis 15 %, vorzugsweise von 0,25 bis 10 %, aufweisen. Aus den gemachten Angaben bezüglich der Hydroxylzahl geht bereits hervor, daß das eingesetzte Diisocyanat, bezogen auf die Hydroxylgruppen der Ausgangskomponenten A) und B), in unterschüssigen Mengen zum Einsatz gelangt. Im allgemeinen entsprechen die zum Einsatz gelangenden Mengen der Ausgangskomponenten A) bis C) einem NCO/OH-Äquivalentverhältnis von 0,05:1 bis 0,8:1, insbesondere 0,1:1 bis 0,6:1.

Nach der unter Urethanbildung ablaufenden Umsetzung der Ausgangskomponenten A) bis C) können zur Erzielung bestimmter Eigenschaften auch geringe Mengen anderer organischer Lösemittel, wie z. B. Ethanol, n-Propanol, iso-Propanol, n-Butanol, iso-Butanol, tert.-Butanol, Pentanol, Hexanol, Octanol, Butylglykol, Ethylglykol, Butyldiglykol, Ethyldiglykol, Methyldiglykol, Methoxypropanol zugesetzt werden, die im Unterschied zu den Komponenten B III) und B IV) nach erfolgter Umsetzung zugesetzt werden und daher lediglich als Lösungsmittel wirken.

Die in den Umsetzungsprodukten vorliegenden freien Carboxylgruppen werden vor oder während des folgenden Dispergierschrittes durch Zugabe von mindestens einer Base zu 25 bis 100 %, vorzugsweise zu 40 bis 100 % in Carboxylatgruppen überführt. Geeignete Basen sind beispielsweise Ammoniak, N-Methylmorpholin, Triethylamin, Dimethylethanolamin, Dimethylisopropanolamin, Triethanolamin, Triisopropylamin, 2-Amino-2-methyl-1-propanol bzw. Gemische dieser und anderer Neutralisationsmittel. Ebenfalls geeignet, jedoch weniger bevorzugt als Neutralisationsmittel, sind Natriumhydroxid, Lithiumhydroxid und Kaliumhydroxid. Bevorzugte Neutralisationsmittel sind Ammoniak, Triethylamin, N-Dimethylethanolamin und N-Dimethylisopropanolamin.

Insbesondere bei Verwendung von tert.-Aminen, wie Triethylamin als Neutralisationsmittel, können diese, da sie auch als Katalysatoren für die Isocyanat-Addition wirken, bereits vor dieser Reaktion zugesetzt werden.

Im Dispergierschritt (unter "Dispergierschritt" ist die Überführung der organischen Harzphase in eine wäßrige Lösung und/oder Dispersion zu verstehen. Im allgemeinen enthalten diese wäßrigen Systeme sowohl gelöste als auch dispergierte Anteile) kann alternativ das Wasser/Neutralisationsmittelgemisch zum Harz, das Harz zum Wasser/Neutralisationsmittelgemisch, das Wasser zum Harz/Neutralisationsmittelgemisch oder das Harz/Neutralisationsmittelgemisch zum Wasser gegeben werden. Die Dispergierbarkeit der Harze in Wasser kann gewünschtenfalls durch Mitverwenden von externen, ionischen oder nichtionischen Emulgatoren, wie z.B. ethoxyliertes Nonylphenol beim Dispergieren, verbessert werden.

Der Dispergierschritt wird üblicherweise bei 40 bis 120°C durchgeführt.

Der Festgehalt der so hergestellten, wäßrigen Bindemitteldispersionen beträgt 15 bis 65 Gew. %, bevorzugt 25 bis 55 Gew. %. Der Anteil an organischen Lösemitteln liegt unter 10 Gew. %, bevorzugt unter 7 Gew. %.

In den erfindungsgemäß zu verwendenden wäßrigen Beschichtungsmitteln liegen die erfindungswesentlichen Bindemittel als wesentlicher Bestandteil der Bindemittelkomponente vor. Neben den erfindungswesentlichen Bindemitteln können jedoch in den Beschichtungsmitteln auch noch weitere, oxidativ trocknende und/oder mit Vernetzerharzen der auch erfindungsgemäß in Betracht gezogenen Art vernetzbare Lackharze vorliegen, deren Menge, bezogen auf den Festkörpergehalt an erfindungswesentlichen Bindemitteln bis zu 50, vorzugsweise bis zu 25 Gew.-% betragen kann.

Wäßrige Beschichtungsmittel, die erfindungsgemäße wäßrige Bindemittel als wesentliche oder alleinige Bindemittelkomponente enthalten, können ohne weiteres als bei Raumtemperatur oxidativ trocknende, wäßrige Lacke oder Beschichtungsmassen eingesetzt werden. Vorzugsweise werden ihnen jedoch die aus der Lacktechnologie üblichen Hilfs- und Zusatzmittel, wie z. B. Pigmente, Trocknungsbeschleuniger, Hautverhinderungsmittel, Verdicker, Verlaufshilfsmittel, Antischaummittel usw. einverleibt. Einige dieser Zusatzmittel können eventuell auch schon während der Herstellung der wäßrigen Bindemittel dem Reaktionsansatz zugefügt werden, falls hierdurch das Herstellungsverfahren nicht gestört wird. Auf diese Weise entstehen hochwertige, bei Raumtemperatur oxidativ trocknende, wäßrige Lacke und Beschichtungsmassen. Sie können durch an sich bekannte Methoden wie beispielsweise Spritzen, Fluten, Tauchen, Walzen, Rakeln, Gießen oder Streichen auf beliebige Substrate wie z.B. Holz, Papier, Metall, Kunststoffe, Glas und mineralische Untergründe aufgebracht werden.

Die Lacke trocknen bei Raumtemperatur, bei forcierter Wärmetrocknung bei bis zu ca. 80°C oder unter Einbrennbedingungen zu klaren, vernetzten, glänzenden Überzügen.

Die erfindungsgemäßen Bindemitteldispersionen eignen sich aber auch als Polyolkomponente in Kombination mit freien Isocyanatgruppen-haltigen Lackpolyisocyanaten für die Anwendung in wäßrigen 2-Komponenten-Beschichtungsystemen oder in Kombination mit blockierten Lackpolyisocyanaten und/oder Aminovernetzern als Bindemittel in hitzehärtenden Beschichtungssystemen.

In den nachfolgenden Beispielen beziehen sich alle Prozentangaben auf das Gewicht.

### Beispiele

### Herstellung einer Polyacrylatkomponente A₁

296,6 g Dipropylenglykoldimethylether in eine Apparatur mit Rührer, Thermometer, Heizung und Kühlvorrichtung einwiegen und auf 140°C aufheizen. Innerhalb von 3 Stunden eine Mischung von 156,0 g n-Butylacrylat, 72,0 g t-Butylmethacrylat, 876,0 g Methylmethacrylat, 24,0 g Hydroxyethylmethacrylat, 72,0 g Acrylsäure und 12,0 g n-Dodecylmercaptan zudosieren. Parallel zu den Monomerenmischungen werden innerhalb von 4 Stunden 51,4 g tert.-Butylper-2-ethylhexanoat (70%ig in Kohlenwasserstoffgemisch) zugegeben. Nach Ende der Peroxidzugabe 2 Stunden bei 140°C nachrühren.

Das lösungsmittelhaltige Polyacrylatharz A₁ hat einen Feststoffgehalt von ca. 80 %, eine Säurezahl von ca. 39 mg KOH/g Festharz und eine OH-Zahl von ca. 11 mg KOH/g Festharz.

### Herstellung Polyacrylatkomponente A₂

295,9 g Methoxypropylacetat in eine Apparatur mit Rührer, Thermometer, Heizung und Kühlvorrichtung einwiegen und auf 140°C aufheizen. Innerhalb von 3 Stunden eine Mischung von 198,0 g n-Butylacrylat, 72,0 g iso-Butylmethacrylat, 852,0 g Methylmethacrylat, 24,0 g Hydroxyethylmethacrylat, 54,0 g Acrylsäure und 18,0 g n-Dodecylmercaptan zudosieren. Parallel zu den Monomerenmischungen werden innerhalb von 4 Stunden 68,6 g tert.-Butylper-2-ethylhexanoat (70%ig in Kohlenwasserstoffgemisch) zugegeben. Nach Ende der Peroxidzugabe 2 Stunden bei 140°C nachrühren.

Das lösungsmittelhaltige Polyacrylatharz A₂ hat einen Feststoffgehalt von ca. 80,6 %, eine Säurezahl von ca. 38,3 mg KOH/g Festharz und eine OH-Zahl von ca. 11 mg KOH/g Festharz.

### Herstellung einer Polyesterkomponente B₁

911 g Phthalsäureanhydrid, 1022 g Isophthalsäure, 3353 g Pentaerythrit, 6900 g Sojaölfettsäure und 1278 g Benzoesäure in eine Apparatur mit Rührer, Thermometer, Heizung und Destillationsaufsatz einwiegen und in 1 Stunde auf 140°C aufheizen. Anschließend in 8 Stunden auf 220°C aufheizen und bei 220°C so lange unter Wasserabspaltung kondensieren, bis die Auslaufviskosität (DIN Becher 4, 75%ig in Xylol) auf 90 bis 110 Sekunden angestiegen ist.

Das so erhaltene Produkt hatte eine Auslaufviskosität von 101 Sekunden (DIN Becher 4, 75%ig in Xylol bei 23°C), eine Säurezahl von 2,9 mg KOH/g Substanz und eine OH-Zahl von 174 mg KOH/g Substanz.

### Herstellung einer Polyesterkomponente B₂

2979 g Phthalsäureanhydrid, 5821 g Sojaölfettsäure und 4436 g Trimethylolpropan in eine Apparatur mit Rührer, Thermometer, Heizung und Destillationsaufsatz einwiegen und in 1 Stunde auf 140°C aufheizen. Anschließend in 8 Stunden auf 220°C aufheizen und bei 220°C so lange unter Wasserabspaltung kondensieren, bis die Säurezahl auf einen Wert kleiner 3,0 mg KOH/g Substanz gefallen ist.

Das so erhaltene Produkt hatte eine Auslaufviskosität von 47 Sekunden (DIN Becher 4, 70%ig in Xylol bei 23°C), eine Säurezahl von 2,6 mg KOH/g Substanz und eine OH-Zahl von 163 mg KOH/g Substanz.

### Beispiel 1 (erfindungsgemäß)

187,5 g der Polyacrylatkomponente A₁ und 150,0 g der Polyesterkomponente B₁ in eine Apparatur mit Rührer, Thermometer, Heizung und Kühlvorrichtung einwiegen und auf 100°C aufheizen und homogenisieren. Anschließend 18,4 g Hexamethylendiisocyanat innerhalb von 15 Minuten zugeben und so lange bei 100°C rühren, bis der NCO-Gehalt auf < 0,1 % gefallen ist. Danach das Harz in 6,4 g NH₃ (22,6 %ig) und 431,5 g Wasser dispergieren. nach dem Dispergieren 4,8 g Ascinin® R konz. (Hautverhinderungsmittel, Bayer AG) zugeben.

Die Bindemitteldispersion hat einen Feststoffgehalt von 39,6 % und eine Säurezahl von ca. 25 mg KOH/g Festharz. Der Gehalt an organischen Colösern beträgt ca. 4,7 %. Die Dispersion zeigt nach 6 Monaten Lagerung bei Raumtemperatur keine Phasentrennung.

### Beispiel 2 (erfindungsgemäß)

187,5 g der Polyacrylatkomponente A₂ und 150,0 g der Polyesterkomponente B₂ in eine Apparatur mit Rührer, Thermometer, Heizung und Kühlvorrichtung einwiegen und auf 100°C aufheizen und homogenisieren. Anschließend 18,4 g Hexamethylendiisocyanat gelöst in 10,1 g Methoxypropylacetat innerhalb von 15 Minuten zugeben und so lange bei 100°C rühren, bis der NCO-Gehalt auf < 0,1 % gefallen ist. Danach das Harz in 7,7 g NH₃ (22,6 %ig) und 417,5 g Wasser dispergieren. nach dem Dispergieren 4,8 g Ascinin® R konz. (Hautverhinderungsmittel, Bayer AG) zugeben.

Die Bindemitteldispersion hat einen Feststoffgehalt von 39,8 % und eine Säurezahl von ca. 19,1 mg KOH/g Festharz. Der Gehalt an organischen Colösern beträgt ca. 6,9 %. Die Dispersion zeigt nach 6 Monaten Lagerung bei Raumtemperatur keine Phasentrennung.

### Vergleichsbeispiel 1

187,5 g der Polyacrylatkomponente A₁ und 150,0 g der Polyesterkomponente B₁ in eine Apparatur mit Rührer, Thermometer, Heizung und Kühlvorrichtung einwiegen und auf 100°C aufheizen und homogenisieren. Danach das Harz in 12,0 g NH₃ (22,6 %ig) und 590,0 g Wasser dispergieren. nach dem Dispergieren 4,5 g Ascinin® R konz. (Hautverhinderungsmittel, Bayer AG) zugeben.

Die Bindemitteldispersion hat einen Feststoffgehalt von 35,7 % und eine Säurezahl von ca. 25 mg KOH/g Festharz. Der Gehalt an organischen Colösern beträgt ca. 3,9 %. Die Dispersion bildet nach wenigen Tagen Lagerung bei Raumtemperatur zwei Phasen.

### Vergleichsbeispiel 2

Das gemäß diesem Vergleichsbeispiel in der Polyesterkomponente B₁) als Reaktionsmedium hergestellte Polymerisatharz entspricht bezüglich seiner Zusammensetzung der Polyacrylatkomponente A₁. Dieses Vergleichsbeispiel ist daher mit Beispiel 1 direkt vergleichbar.

150 g der Polyesterkomponente B₁ und 35,6 g Dipropylenglykoldimethylether in eine Apparatur mit Rührer, Thermometer, Heizung und Kühlvorrichtung einwiegen und auf 140°C aufheizen. Innerhalb von 3 Stunden eine Mischung von 18,7 g n-Butylacrylat, 8,7 g t-Butylmethacrylat, 105,3 g Methylmethacrylat, 2,9 g Hydroxyethylmethacrylat, 8,7 g Acrylsäure und 1,4 g n-Dodecylmercaptan zudosieren. Parallel zu den Monomerenmischungen werden innerhalb von 4 Stunden 6,1 g tert.-Butylper-2-ethylhexanoat (70%ig in Kohlenwasserstoffgemisch) zugegeben. Nach Ende der Peroxidzugabe 2 Stunden bei 140°C nachrühren. Danach das Harz in 6,4 g NH₃ (22,6 %ig) und 431,5 g Wasser dispergieren. Nach dem Dispergieren 4,8 g Ascinin® R konz. (Hautverhinderungsmittel, Bayer AG) zugeben.

Die Bindemitteldispersion hat einen Feststoffgehalt von 39,0 % und eine Säurezahl von ca. 25 mg KOH/g Festharz. Der Gehalt an organischen Colösern beträgt ca. 4,7 %. Die Dispersion zeigt nach 6 Monaten Lagerung bei Raumtemperatur keine Phasentrennung.

### Prüfung als Klarlack:

Jeweils 100,0 g der Bindemitteldispersionen werden mit 0,06 % Co Metall, bezogen auf Bindemittelharz, sikkativiert (Octa Soligen Kobalt 7 aqua® Gebr. Borchers AG) und mit einer Schichtstärke von 180 µm auf eine Glasplatte aufgerakelt. Die Abmusterung der Filme erfolgt nach 24 Stunden und nach 7 Tagen Lagerung (bei Raumtemperatur).

| | Beispiel 1 | Vergleichsbeispiel 1 | Vergleichsbeispiel 2 |
|---|---|---|---|
| Lagerstabilität: (nach 7 d) | i.O. | 2-phasig | i.O. |
| Trocknung: (Griffest) | 45 Min. | 60 Min | 50 Min |
| Aussehen: Beständigkeiten¹⁾: | klar | trübe | klar |
| Benzinfestigkeit²⁾ (nach 1d/7d) | 3/1 | 4/4 | 5/5 |
| Wasserfestigkeit³⁾ (nach 1d/7d) | 1/1 | 3/3 | 3/3 |

| | | | |
|---|---|---|---|
| **Anmerkung:** ¹⁾ Beständigkeiten: 0 - 5, 0 = nicht verändert, 5 = sehr stark verändert | | | |
| ²⁾Mit Standardprüfkraftstoff nach Fachausschuß Mineralöl- und Brennstoffnormung (DIN 51604, Teil I), Einwirkdauer 1 Minute. | | | |
| ³⁾ Einwirkdauer 5 Stunden. | | | |

Das Vergleichsbeispiel 1 zeigt, daß die Umsetzung von Polyesterteil und Polyacrylatteil mit einem Diisocyanat notwendig ist, um lagerstabile Dispersionen und eine bessere Verträglichkeit (klare Filme) zu erreichen. Das Vergleichsbeispiel 2 zeigt, daß durch die radikalische Polymerisation von (Meth)acrylatmonomeren in Gegenwart von fettsäurehaltigen Polyestern die Reaktivität der ungesättigten Fettsäuren reduziert wird, wodurch die Beständigkeitseigenschaften der getrockneten Filme ungünstiger ausfallen.

## Patentansprüche

1. Verfahren zur Herstellung von wäßrigen Bindemitteln für wäßrige Beschichtungsmittel, dadurch gekennzeichnet, daß man ein Gemisch aus
A) 9,9 bis 85 Gew.-% einer hydroxy- und säurefunktionellen Poly(meth)acrylatkomponente und
B) 14,9 bis 90 Gew.-% einer hydroxyfunktionellen, fettsäuremodifizierten Polyesterkomponente
mit
C) 0,1 bis 20 Gew.-% einer Diisocyanatkomponente, bestehend aus mindestens einem organischen Diisocyanat des Molekulargewichts 140 bis 318,
unter Urethanbildung umsetzt und anschließend das Umsetzungsprodukt unter vorhergehender oder gleichzeitiger Neutralisation zumindestens eines Teils der vorliegenden Carboxylgruppen in Wasser löst und/oder dispergiert, mit der Maßgabe, daß sich die unter A) bis C) genannten Prozentangaben zu 100 ergänzen.

2. Verfahren gemäß Anspruch 1, dadurch gekennzeichnet, daß die hydroxy- und säurefunktionelle Poly(meth)acrylatkomponente A) aus:
A I) 1 bis 99, bevorzugt 1 bis 50, besonders bevorzugt 15 bis 25 Gew.-%, α, β ungesättigter Mono- und/oder Dicarbonsäuren mit 3 bis 16 C-Atomen,
A II) 0,1 bis 30, bevorzugt 0,1 bis 20, besonders bevorzugt 0,5 bis 10 Gew. % hydroxyfunktioneller Alkylester der (Meth)acrylsäure mit gegebenenfalls Ethergruppen aufweisenden Hydroxyalkyl estern mit 2 bis 12 Kohlenstoffatomen,
A III) 0 bis 98, bevorzugt 15 bis 98, besonders bevorzugt 30 bis 95 Gew.-% (Meth)acrylsäure(cyclo)alkylester mit 1 bis 20 C-Atomen im Alkylrest und
A IV) 0 bis 80, bevorzugt 0 bis 65, besonders bevorzugt 0 bis 50 Gew.-% anderer copolymerisierbarer Verbindungen,
hergestellt worden ist, wobei sich die zu A I) bis A IV) gemachten Prozentangaben zu 100 ergänzen.

3. Verfahren gemäß Anspruch 1 und 2, dadurch gekennzeichnet, daß die hydroxyfunktionelle, fettsäuremodifizierte Polyesterkomponente aus:
B I) 15 - 90, bevorzugt 25 bis 75, besonders bevorzugt 35 bis 65 Gew.-% einer Monocarbonsäure, die zumindest aus einer Monocarbonsäure des Molekularbereichs 122 bis 340 besteht, mit der Maßgabe, daß zumindest 60 Gew.-% der Komponente B1) aus mindestens einer ungesättigten, zur oxidativen Trocknung befähigten Fettsäuren bestehen,
B II) 7 bis 60, bevorzugt 10 bis 40, besonders bevorzugt 13 bis 30 Gew.-% mindestens einer Di-, Tri-, Tetracarbonsäure bzw. deren Anhydride des Molekulargewichtsbereichs 98 bis 840,
B III) 10 bis 60, bevorzugt 15 bis 45, besonders bevorzugt 20 bis 40 Gew.-% di- und/oder höherfunktionelle Alkohole und
B IV) 0 bis 30 Gew.-% anderer Komponenten
hergestellt worden wobei sich die bezüglich B I) bis B IV) genannten Prozentsätze zu 100 ergänzen

4. Gemäß Anspruch 1 bis 3 erhältliche wäßrige Bindemittel.

5. Verwendung der gemäß Anspruch 1 bis 3 erhältlichen wäßrigen Bindemittel in, gegebenenfalls in Kombination mit anderen oxidativ trocknenden Lackharzen in, gegebenenfalls die üblichen Hilfs- und Zusatzstoffe der Lacktechnologie enthaltenden, luft- und/oder hitzetrocknenden Beschichtungsmitteln.

6. Verwendung der gemäß Anspruch 1 bis 3 erhältlichen wäßrigen Bindemittel in Kombination mit organischen Polyisocyanaten mit freien Isocyanatgruppen in, gegebenenfalls die üblichen Hilfs- und Zusatzstoffe der Lacktechnologie enthaltenden, wäßrigen 2-K-Polyurethan-Beschichtungsmitteln.

7. Verwendung der gemäß Anspruch 1 bis 3 erhältlichen wäßrigen Bindemittel in Kombination mit blockierten Polyisocyanaten und/oder Aminovernetzern in, gegebenenfalls die üblichen Hilfs- und Zusatzstoffe der Lacktechnologie enthaltenden, wäßrigen hitzehärtenden Beschichtungsmitteln.

## Claims

1. A process for preparing aqueous binders for aqueous coating agents, characterised in that a mixture of
A) 9.9 to 85 wt.% of a hydroxy- and acid-functional poly(meth)acrylate component and
B) 14.9 to 90 wt.% of a hydroxy-functional, fatty acid modified polyester component
is reacted with
C) 0.1 to 20 wt.% of a diisocyanate component, consisting of at least one organic diisocyanate with a molecular weight of 140 to 318,
with the formation of a urethane and then the reaction product is dissolved and/or dispersed in water with prior or simultaneous neutralisation of at least some of the carboxyl groups present, with the proviso that the percentage data given under A) to C) add up to 100.

2. A process according to Claim 1, characterised in that the hydroxy- and acid-functional poly(meth)acrylate component A) has been prepared from:
A I) 1 to 99, preferably 1 to 50, in particular 15 to 25 wt.% of α,β-unsaturated mono and/or dicarboxylic acids with 3 to 16 carbon atoms,
A II)0.1 to 30, preferably 0.1 to 20, in particular 0.5 to 10 wt.% of hydroxy-functional alkyl esters of (meth)acrylic acid with hydroxyalkyl esters optionally containing ether groups, with 2 to 12 carbon atoms,
A III)0 to 98, preferably 15 to 98, in particular 30 to 95 wt.% of (cyclo)alkyl esters of (meth)acrylic acid with 1 to 20 carbon atoms in the alkyl group and
A IV)0 to 80, preferably 0 to 65, in particular 0 to 50 wt.% of other copolymerisable compounds,
wherein the percentage data relating to A I) to A IV) add up to 100.

3. A process according to Claims 1 and 2, characterised in that the hydroxy-functional, fatty acid modified polyester component has been prepared from:
B I) 15 to 90, preferably 25 to 75, in particular 35 to 65 wt.% of a monocarboxylic acid component which consists of at least one monocarboxylic acid with a molecular weight in the range 122 to 340, with the proviso that at least 60 wt.% of component B I) consists of at least one unsaturated fatty acid capable of oxidation drying,
B II)70 to 60, preferably 10 to 40, in particular 13 to 30 wt.% of at least one di, tri or tetracarboxylic acid or their anhydrides with a molecular weight in the range 98 to 840,
B III) 10 to 60, preferably 15 to 45, in particular 20 to 40 wt.% of difunctional and/or higher functional alcohols and
B IV)0 to 30 wt.% of other components,
wherein the percentages mentioned with respect to B I) to B IV) add up to 100.

4. An aqueous binder obtainable in accordance with Claims 1 to 3.

5. Use of the aqueous binders obtainable in accordance with Claims 1 to 3 optionally in combination with other oxidation drying lacquer resins, in air- and/or heat-drying coating agents, optionally containing conventional auxiliary substances and additives from lacquer technology.

6. Use of the aqueous binders obtainable in accordance with Claims 1 to 3 in combination with organic polyisocyanates with free isocyanate groups in aqueous 2-component polyurethane coating agents, optionally containing conventional auxiliary substances and additives from lacquer technology.

7. Use of the aqueous binders obtainable in accordance with Claims 1 to 3 in combination with blocked polyisocyanates and/or amino cross-linking agents in aqueous heat-curing coating agents, optionally containing conventional auxiliary substances and additives from lacquer technology.

## Revendications

1. Procédé pour la préparation de liants aqueux pour des agents d'enduction aqueux, caractérisé en ce qu'on fait réagir un mélange constitué par
A) à concurrence de 9,9 à 85% en poids, un composant de poly(méth)acrylate à fonctionnalité hydroxyle et à fonctionnalité acide, et
B) à concurrence de 14,9 à 90% en poids, un composant de polyester à fonctionnalité hydroxyle, modifié par un ou plusieurs acides gras,
avec
C) à concurrence de 0,1 à 20% en poids, un composant de diisocyanate constitué par au moins un diisocyanate organique possédant un poids moléculaire de 140 à 318,
avec formation d'uréthane et on dissout et/ou on disperse ensuite dans de l'eau le produit réactionnel en procédant à une neutralisation préalable ou simultanée d'au moins une partie des groupes carboxyle présents, avec cette mesure que les indications en pour cent mentionnées sous A) à C) se complètent pour donner 100.

2. Procédé selon la revendication 1, caractérisé en ce que le composant de poly(méth)acrylate A) à fonctionnalité hydroxyle et à fonctionnalité acide a été préparé à partir de:
AI) à concurrence de 1 à 99, de préférence de 1 à 50, de manière particulièrement préférée de 15 à 25% en poids, des acides mono- et/ou dicarboxyliques à insaturation α,β contenant de 3 à 16 atomes de carbone,
AII) à concurrence de 0,1 à 30, de préférence de 0,1 à 20, de manière particulièrement préférée de 0,5 à 10% en poids, des esters alkyliques à fonctionnalité hydroxyle d'acide (méth)acrylique comprenant des esters hydroxyalkyliques contenant de 2 à 12 atomes de carbone, présentant le cas échéant des groupes éther,
AIII)à concurrence de 0 à 98, de préférence de 15 à 98, de manière particulièrement préférée de 30 à 95% en poids, des esters (cyclo)alkyliques d'acide (méth)acrylique, contenant de 1 à 20 atomes de carbone dans le radical alkyle, et
AIV) à concurrence de 0 à 80, de préférence de 0 à 65, de manière particulièrement préférée de 0 à 50% en poids, d'autres composés copolymérisables,
les indications en pour cent fournies pour AI) à AIV) se complétant pour donner 100.

3. Procédé selon les revendications 1 et 2, caractérisé en ce que le composant de polyester à fonctionnalité hydroxyle, modifié par un ou plusieurs acides gras, a été préparé à partir de:
BI) à concurrence de 15 à 90, de préférence de 25 à 75, de manière particulièrement préférée de 35 à 65% en poids, un acide monocarboxylique qui est constitué au moins par un acide monocarboxylique du domaine de poids moléculaire de 122 à 340, avec cette mesure qu'au moins 60% en poids du composant BI) sont constitués par au moins un acide gras insaturé apte au séchage par oxydation,
BII) à concurrence de 7 à 60, de préférence de 10 à 40, de manière particulièrement préférée de 13 à 30% en poids, au moins un acide dicarboxylique, tricarboxylique, tétracarboxylique, respectivement un de leurs anhydrides du domaine de poids moléculaire de 98 à 840,
BIII)à concurrence de 10 à 60, de préférence de 15 à 45, de manière particulièrement préférée de 20 à 40% en poids, des alcools difonctionnels et/ou à fonctionnalité supérieure, et
BIV) à concurrence de 0 à 30% en poids, d'autres composants,
les indications en pour cent mentionnées pour BI) à BIV) se complétant pour donner 100.

4. Liants aqueux que l'on obtient conformément aux revendications 1 à 3.

5. Utilisation des liants aqueux que l'on obtient conformément aux revendications 1 à 3, le cas échéant en combinaison avec d'autres résines pour vernis séchant par oxydation dans des agents d'enduction séchant à l'air et/ou à la chaleur, contenant le cas échéant les adjuvants et les additifs habituels de la technologie des laques, des vernis ou des peintures.

6. Utilisation des liants aqueux que l'on obtient conformément aux revendications 1 à 3 en combinaison avec des polyisocyanates organiques contenant des groupes isocyanate libres dans des agents d'enduction aqueux de polyuréthanne à deux composants contenant le cas échéant les adjuvants et les additifs habituels de la technologie des laques, des vernis ou des peintures.

7. Utilisation des liants aqueux que l'on obtient conformément aux revendications 1 à 3 en combinaison avec des agents de réticulation contenant un ou plusieurs groupes amino et/ou avec des polyisocyanates bloqués dans des agents d'enduction aqueux thermodurcissables contenant le cas échéant les adjuvants et les additifs habituels de la technologie des laques, des vernis ou des peintures.
